# EUROPEAN PATENT SPECIFICATION

(11) **EP 1 317 155 B1**
(45) Date of publication and mention of the grant of the patent: **28.07.2004**
(21) Application number: 02025829.9
(22) Date of filing: 18.11.2002
(51) Int. Cl.: H04Q 7/30

(54) **Method and device for data packet asynchronous transport in the radio access network of a mobile communication system**
Verfahren und Vorrichtung für asynchronen Datenpakettransport im Funkzugangsnetz eines mobilen Kommunikationssystems
Procédé et appareil pour le transport asynchrone de paquets de données dans le réseau d'accès

(30) Priority: 30.11.2001 IT MI20012511
(43) Date of publication of application: 04.06.2003
(73) Proprietor: Siemens Mobile Communications S.p.A., 20126 Milano (IT)
(72) Inventor: Celin, Alessandra, 20052 Monza (IT)

(56) References cited:
- EP-A- 1 150 523
- WO-A-01/58187

## Description

### Field of the invention

The present invention relates to data transmission services for digital cellular communication systems, and more in particular, scope of the same is a method and a device for the implementation of an asynchronous transport of data packets inside the radio access network of said systems.

In particular, the invention can find application in the so-called general packet radio service (GPRS, acronym for General Packet Radio Service) of GSM systems (Global System for Mobile communications).

### Background art

It is well known that, to keep into account the increasing interest in the use of mobile systems also for data traffic, the standardization organizations have specified a packet switching data access (which in GSM networks is the GPRS service), optimising the exploitation of the network and radio resources for an alternating traffic, such as the data traffic.

In current implementations, a user employing the service is connected, through the conventional radio interfaces of the GSM, to the base station serving the cell in which it is located, and the connection interfaces between the base station and the packet switching data network employ the communication protocol foreseen by the network, which the user wants to connect with, in particular, the Internet protocol. Inside the base station, the connection between the controller of the base station, to which the GPRS traffic control unit is generally associated, and the base transceiver station controlled by the same is on the contrary of the synchronous type, e. g. through PCM lines.

Base stations manufacturers show an interest in replacing the synchronous connection by a connection based it too on the Internet protocol. The use of a same protocol both outside and inside the base station enables simplifying the functions (in particular, concerning the GPRS traffic control unit) and therefore reducing costs. Moreover, it enables a better exploitation of the available resources, multiplexing on a same resource data relevant to different communications. However, Internet type protocols are asynchronous ones, and their use in an environment whose operation bases on a rigid synchronization between the different parts, such as the radio access network, which the base station is part of, can create instability problem.

### Object of the invention

Scope of the invention is to enable the implementation of a GPRS service or similar services, with given synchronization requirements, on a network based on the Internet or similar protocols. The proposals to attain this target are not known. The suggestion that can be found in literature on the association between GPRS type services and Internet protocol (e.g. see the papers: "Seamless IP-based service integration across fixed/mobile and corporate/public networks" illustrated by C. Wietfeld et al. at the IEEE 49th Vehicular Technology Conference, Houston (TX, USA) 16-20 May 1999; "IP traffic over GPRS - an Internet service oriented analysis" illustrated by V.A. Chitre et al. in the same conference, and "Delay analysis for IP speech over GPRS" illustrated by J. Parantainen et. al. at the IEEE 50th Vehicular Technology Conference, Amsterdam (Netherlands, 19-22 September 1999) concern the use of the GPRS to transport data packets in Internet protocol, and therefore relate to an application opposite to that of the invention.

A prior art method for supporting the Internet protocol on the Abis interface of a GSM network is disclosed in EP-A-1 150 523 (LUCENT TECHNOLOGIES INC.), published on 31 October 2001.

### Summary of the invention

According to a first aspect of the invention, a method is offered for the asynchronous transport of information blocks, relevant to packet switching connection, in the descending direction of a communication channel inside the radio access network of a mobile communication system, in which, at a downstream end of said channel, said information blocks are transmitted at a predetermined frequency towards a radio interface, characterized in that, at the downstream end of the channel, the information blocks coming from an upstream end of the channel itself are included in an ordered block queue, employing an identification number associated to each block at the upstream end of the channel according to a variable law, based on an evaluation of the delay made using information on the queue status supplied by said downstream end; and any time a block (current block) is sent towards the radio interface, an identification number of said block is compared with the identification number of the last block received, sending a signal containing information on the queue state to the upstream end when the difference between said two numbers representing the queue length, is outside an interval limited by a lower threshold and an upper threshold; and in the fact that at the upstream end, based on the information contained in said signal, said generation law is varied in such a way that identification numbers, such to bring and maintain said difference within the predetermined interval are associated to blocks to be sent on the channel at instants following said reception.

According to another aspect of the invention, a device is offered for the control of the asynchronous transport of information blocks relevant to a packet switching connection in the descending direction of a communication channel inside the radio access network of a mobile communication system, in which a first unit of the network, placed at an upstream end of the channel, sends said information blocks on the channel and a second unit of the network, placed at a downstream end of the channel, sends the blocks received towards a radio interface at a predetermined frequency, characterized in that:
- said first unit includes means to generate and associate to each block, before the transmission on the channel, a relevant identification number, determined according to a variable law on the basis of the delay introduced by the channel, evaluated on the basis of data concerning the queue state supplied by said second unit,
- said second unit includes first storage means to form an ordered queue of the blocks to be sent to the radio interface, employing the identification number associated to each block received; means for the determination of an identification number of a current block that is sent towards said radio interface; second storage means to store the identification number associated to a block received, updating it at each arrival of a block; means to determine the length of the queue present in said first storage means, as difference between the number contained in said second storage means and the number of the current block, and control the transmission towards the first unit of a signal, containing said information on the queue state, when said difference depart from an interval limited by a lower threshold and an upper threshold; and
- said generation and association means of the identification number at a block in the first unit include delay estimate means that, based on said signal, control the updating of said generation law in order that identification numbers such to bring the queue length within the predetermined interval are associated to blocks to be sent on the channel at instants following the reception of said signal.

### Brief description of figures

The present invention could be better understood considering the attached drawings showing a preferred embodiment of the invention, in which.
- figure 1 is a simplified diagram of a portion of a GSM network offering the GPRS service;
- figure 2 is a diagram showing the trend of the delay introduced by the transport with Internet protocol inside the base station sub-system of the network in fig. 1;
- figure 3 is a block diagram of the parts that, in the base station sub-system of the network in fig. 1, enable the implementation of the invention;
- figure 4 is a flow chart of the operations performed by the transceiver station for the implementation of the method according to the invention;
- figure 5 is a flow chart of the operations performed by the controller of the base station for the implementation of the method according to the invention; and
- figures 6 - 8 are diagrams of an example of the method according to the invention, in case of ordinary traffic, congestion starting and congestion end, respectively.

### Detailed description of an embodiment of the invention

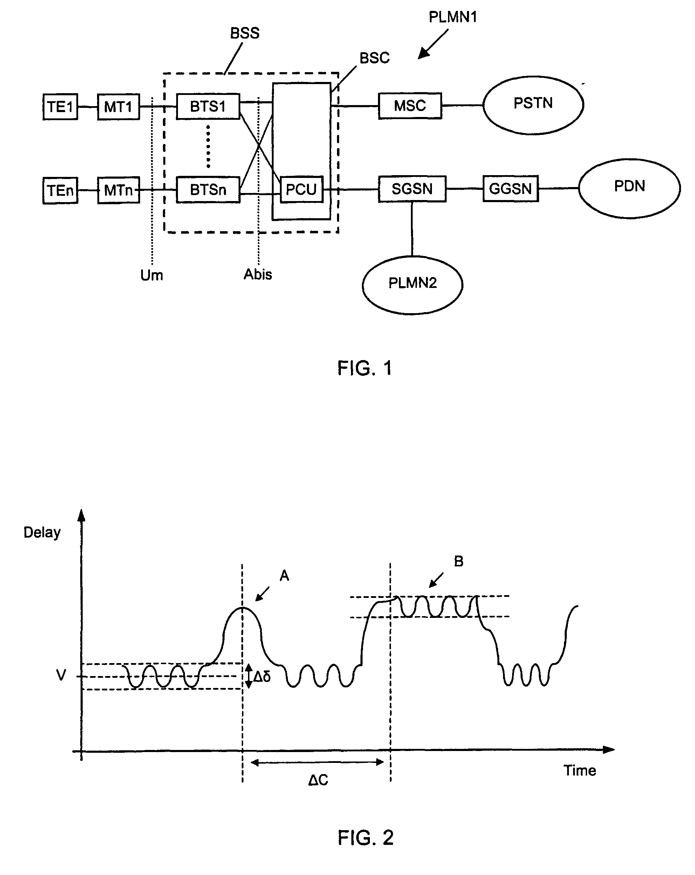

The structure of a GSM network PLMN1 offering the GPRS service is shown in figure 1. For convenience, only the mobile stations having access to the GPRS service have been represented, omitting the connections concerning the signal and the short message service. The mobile stations of the figure consist of a data terminal TE1...TEn (e. g. a laptop computer) and a mobile terminal MT1...MTn suitable for data packet transmission. The transceiver stations of a given number of cells have been denoted BTS1...BTSn, connected to a same controller of the base station BSC. It includes a PCU unit for the GPRS traffic control, to which BTS stations connect during a packet switching connection. the BSC controller and the transceiver stations BTS1...BTSn connected to the same form the so-called sub-system of the base station BSS, forming part of the radio access network of PLMN1. The BSC controller is connected in turn to the mobile switching centre MCS, which controls the circuit switching communications and gives access to the fixed telephone network PSTN, and to a support node of the GPRS service, denoted with SGSN. For packet switching communications, it performs the same functions carried out by MSC for circuit switching communications and gives access both to packet switching data networks, such as the PDN network, through a GGSN port, and to other communication networks among mobile, like the PLMN2 network.

The drawing also shows the Um interfaces in the radio access network, made of BSS and the mobile terminals MT1...MTn, and the Abis interface between the BSC and BTSi (i = 1...n), because said interfaces are interesting for the invention.

The invention finds application at Abis interface level and enables to use a channel operating according to the Internet protocol (hereinafter also referred to in short "IP protocol") for the transport of information blocks at RLC (Radio Link Control) level, relevant to packet switching connections, from BSC towards a transceiver station BTSi. Even in the case of an asynchronous connection as the one used by the invention, BTSi must emit the RLC blocks on the Um interface at intervals as requested by the standards (in particular one block every 20 ms). However, the asynchronous nature of the IP protocol causes the blocks to suffer an unplanned delay and arrive to a transceiver station BTSi at variable intervals. In fact, as shown in fig. 2, in normal traffic conditions (congestion lack), the delay will fluctuate around an average value V with Δδ oscillation width while in case of high traffic (congestion), peaks of the delay (as indicated in A) or moderately long periods could occur in which the delay oscillates around a high average value (as indicated in B).

According to the invention, to assure the transmission of the packets towards the radio interface Um in the correct sequence and periodicity despite the above mentioned variable delay, in each transceiver station BTSi a queue of the blocks relevant to a given communication is made, arranging them in the order they must be transmitted inside the relevant time slot of a GPRS frame. To this purpose, an identification number BN is used, which BSC associates to each block. BSC must send a block rather in advance of the instant at which the "turn" occurs in BTSi for the transmission of the block itself towards the antenna, to consider the propagation delay introduced by the asynchronous transport protocol. Of course, the advance shall not be disproportionate, in order to minimize the queue; on the other hand, if the advance is too small, the block could reach BTSi after its "turn" for transmission to Um has already passed over, this would involve the loss of the block itself. Of course, since BSC cannot know the progression of the queue in BTSi, an adaptive interaction mechanism is foreseen between the two parts that, after an initial average delay estimate introduced by the network, enables to continuously update said estimate in order to optimise the queue and limit block losses as far as possible.

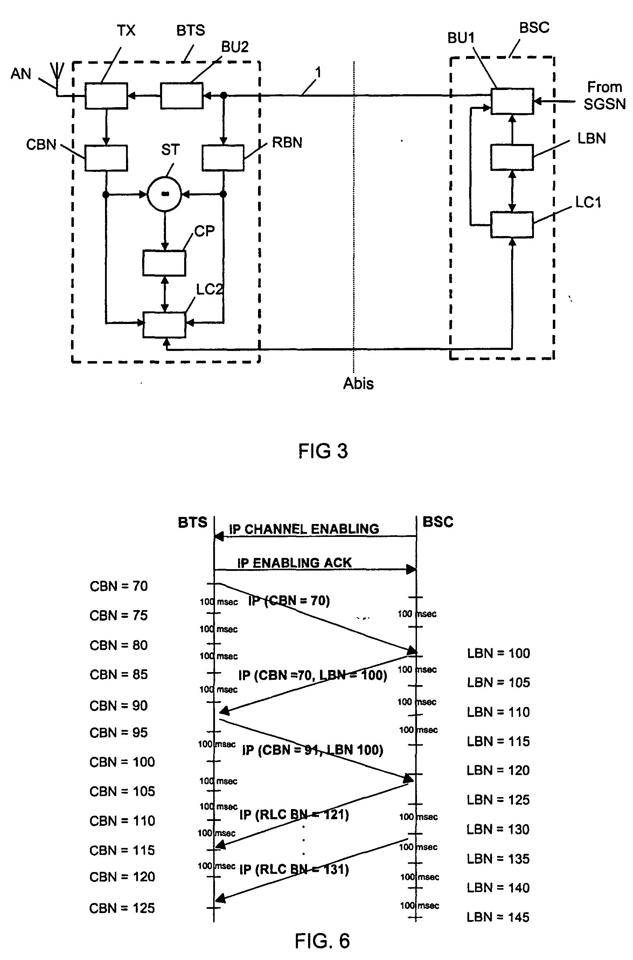

A functional diagram of the parts allowing the correct management of the flow of RLC blocks in BTS and in a generic transceiver station shall now be described with reference to Fig. 3.

BSC includes a memory device BU1 in which IP packets coming from SGSN are temporarily stored, for their segmentation in RLC blocks to be sent on channel 1 (interface Abis) at intervals depending on traffic conditions. The BU1 memory is associated to a local counter LBN generating and supplying BU1 with an identification number BN to be associated to a block sent on channel 1. On channel enabling for the GPRS service, LBN is initialised at a given value LBN₀, associated to the value reached at that moment by a counter CBN of BTS, described later on, and considers the average propagation delay between BSC and BTS and vice versa. In lack of congestion on channel 1, LBN generates a new BN value at the same intervals BU1 sends the blocks towards BTS. The regular association of identification numbers and blocks by LBN is altered following a command of a delay estimate logic LC1, to keep into account the occurrence of possible congestion situations and their cessation, signalled by a logic LC2 if BTS through IP messages. In particular, in case of congestion, LC1 increases LBN and, though continuing to cause the generation of a new number every 20 ms, it acts on BU1 control parts in order that blocks are sent on the channel at a reduced frequency, e.g. every 40 ms. Consequently, the consecutive blocks sent by BU1 to BTS shall be associated to non consecutive BN values (e.g. to BN pair values). On termination of the congestion, LC1 decreases the value reached by LBN and causes the temporary suspension of block transmission towards BTS.

Inside BTS, a buffer memory BU2 receives the RLC blocks coming from channel 1 and puts them in queue on the basis of their BN identifier, sending the same every 20 ms to the antenna AN (interface Um of fig. 1), after the usual convolution, interleaving and digital-to-analogue conversion operations that are considered, for convenience, made inside the TX block. The input of the buffer memory BU2 is associated to a RBN record in which the BN number of a block received is stored, updating it at each new arrival (last BN), and the output of BU2 (or of TX) is associated to a counter CBN, counting the BN number of the block being transmitted to the antenna (current BN). It must be pointed out that an RLC block is loaded in BU2 provided that its turn for transmission to the antenna is not already passed over (that is, the identification number of a block received must be sufficiently higher than that counted at that instant by CBN to enable to perform the necessary processing in TX), otherwise it is rejected. The same applies to RLC blocks reaching BU2 in large advance.

CBN and RBN devices are connected to a subtractor ST, calculating the difference D between the last BN and the current BN and supplies it to a comparator CP. CP compares the D value with a lower threshold T1 and an upper threshold T2 (supplied for instance by BSC in a system initialisation phase), whose value depends on the particular network and is a function of the average value V of the delay of RLC blocks (fig. 2), of the width Δδ of the fluctuations of said delay around the average value V and of the time ΔC between subsequent congestion periods. The result of the comparison is communicated to the delay estimate logic LC1 that, when the difference D is lower than T1 (congestion starting) or higher than T2 (congestion end), determines the transmission to BSC of a message of the " Current BN = α, Last BN = β" type, or of a message of the " Current BN = α, D = γ" type. This information enables LC1 to intervene on the counter LBN to update the law for the generation of BN numbers in order that the difference D (that is the queue length) maintains in the T1 - T2 interval when traffic conditions vary. Tentatively, the congestion can be signalled by the reduction of the queue under some block (e. g. 3 - 6) and the end of the congestion by the surpassing of a length of fifteen or twenty blocks.

In the figure, it has been assumed that the current BN and the last BN, which are provided to LC2 by CBN and RBN are communicated to BSC. In LC1 a comparator and possibly a subtractor shall be present, similar to CP and a ST, respectively, to enable LC1 to evaluate the delay starting from the information supplied by BTS. LC1 shall in any case receive the current BN to eliminate possible drift mechanisms between BSC and BTS concerning the transmission of the blocks on channel 1 and to the antenna AN.

Notice that, even the drawing shows for convenience a communication line between logic LC1 and LC2 for the exchange of signals between BSC and BTS requested by the invention; actually, these signals will use channel 1, which of course is a bi-directional channel.

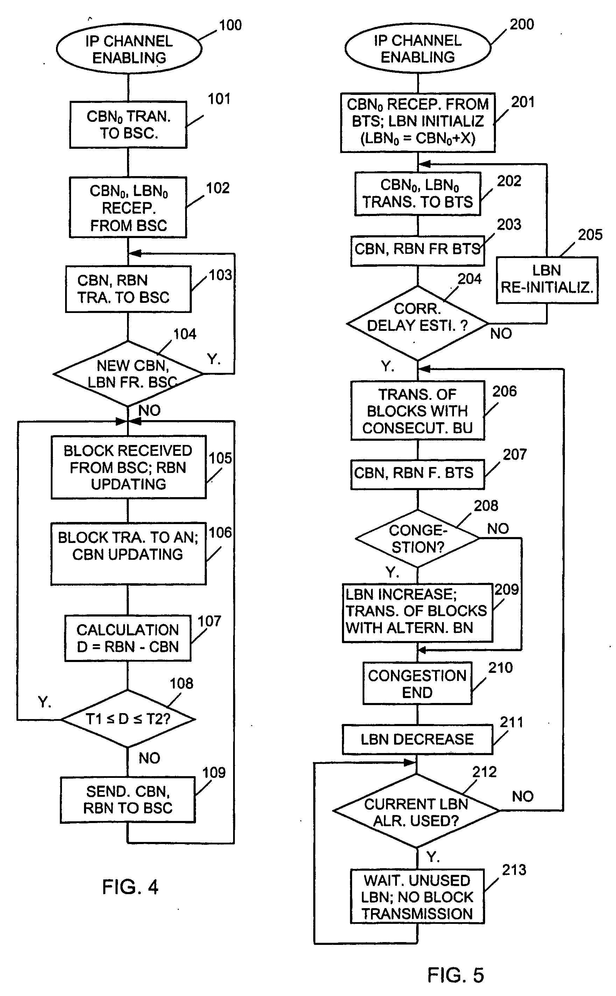

We shall now describe the method more in detail, making reference to figures 4 and 5. CBN, RBN, LBN indicate in the diagrams the contents of the homonymous parts of fig. 3.

The first operations after the enabling of the IP channel (steps 100 in fig. 4 and 200 in fig. 5) concern an initial delay propagation estimate between BTS and BSC. To this purpose BTS sends the CBN₀ value reached by the counter CBN to BSC on enabling (step 101). This value is used by BSC to set an initial value LBN₀ = CBN₀ + X (step 201) in the local counter LBN, enabling to compensate the average propagation delays in the two directions. The LBN₀ value is communicated by BSC to BTS (step 202) that, on receipt, gives it back to BSC as RBN value together with the value reached on that moment by the counter CBN (steps 102, 103). On receipt of these values (step 203), BSC checks if the difference is within the limits, that is, if the delay has been correctly evaluated (step 204). If the initial estimate is not correct, BSC returns to step 202 setting a new value in LBN (step 205). BTS, receiving a new LBN value from BSC (YES output of step 104) returns in turn to step 103. We proceed in this way until step 204 gives a positive result.

Once the delay is correctly estimated, BSC proceeds to the transmission of RLC blocks associating consecutive BN numbers to the same (step 206) and continues operating in this way until congestion occurs. When receiving the blocks, BTS inserts them in the correct position of the queue updating each time the RBN value (step 105). Furthermore, every 20 ms, BTS sends the blocks to AN, updates the counter CBN, calculates the difference D = RBN - CBN at each new block transmitted and compares it with thresholds T1 and T2 (steps 106 - 108). If the difference D is included in the T1 - T2 interval (YES output of step 108), BTS returns to step 105, otherwise it sends the message to BSC with the CBN and RBN values matching which the failure has been detected (step 109), returning then to step 105.

The case in which D becomes lower than D1 shall be interpreted as congestion starting. BSC, receiving from BTS the message with RBN, CBN values (step 207), recognizes the congestion (YES output of step 208), increases LBN by a given quantity (step 209) and takes actions in order to reduce the total traffic. For instance, through continuing to have LBN progressed every 20 ms, BSC will send a block every 40 ms. Consequently, packets with non-consecutive numbers shall be transmitted in this phase, in particular with alternate numbers.

From the BTS point of view, the surpassing of T2 is treated as the drop under T1, with the transmission to BSC of the message with RBN, CBN values which cause the threshold to be surpassed. BSC recognizes the end of the congestion (step 210) and decreases the value reached at that instant by the local counter LBN (step 211). Furthermore, it suspends the transmission of blocks towards BTS until a not yet used LBN is obtained (steps 212, 213); afterwards operations are restarted from step 206, as in the case of lack of congestion. Consequently, in BTS the RBN value remains unchanged while the CBN one regularly progresses because blocks continue to be sent towards the AN antenna: the queue is brought in short within the desired interval.

It must be noticed that, even if not indicated in the diagrams, there will be a given hysteresis for the transmission of the signals of situations of congestion starting and end by BTS, which shall be sent when D exceeds the T1 - T2 interval for a given number of consecutive block. Moreover, the setting phase of the local counter could also be periodically made even when the IP channel is not active, so that when a time slot for the GPRS service is enabled from steps 100, 200 we directly go to steps 105, 206 and there is no dead time for the use of the IP channel.

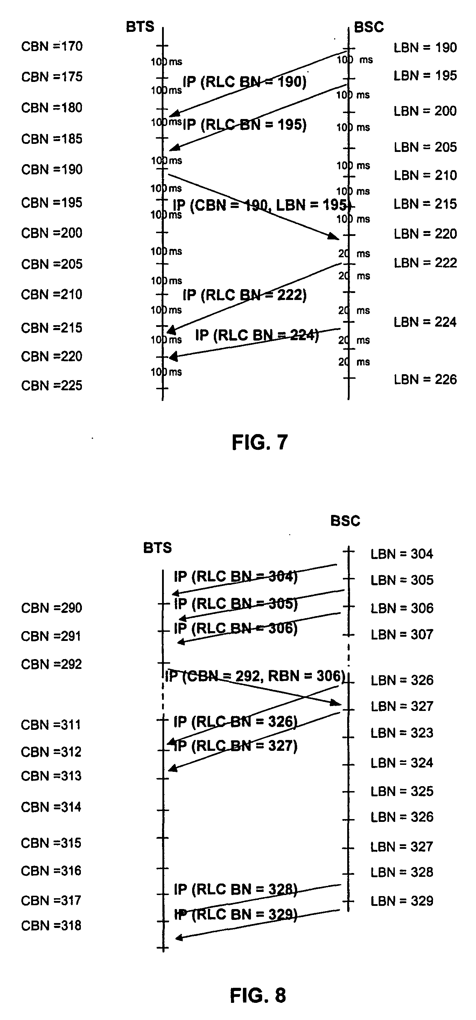

Figures 6 - 8 represent a numeric example of the described method, in the hypothesis of high average delay V of 200 ms and high Δδ and ΔC (fig. 2). The thresholds considered in the figure are T1 = 5 and T2 = 13. Arrows indicate the IP messages exchanged between BSC and BTS for the transmission of count values of CBN, RBN or LBN, or for the transmission of the RLC blocks with the relevant block number (RLC BN = x). Figure 6 refers to the initial delay estimate phase after enabling of the channel (indicated in the upper part of the figure from the transmission of the enabling request from BSC to BTS and the transmission of the occurred enabling confirmation ACK by BTS) and to the case of absence of congestion immediately after enabling; fig. 7 refers to the case of congestion starting and fig. 8 to the case of congestion end. Similarly to the flow charts, CBN, RBN, LBN indicate the values supplied by the homonymous parts. It must be noticed that in fig. 7 the time scale for BSC is magnified in the lower part to illustrate the transmission of blocks at reduced frequency and with alternate numbers. Figure 8 shows also the above-mentioned hysteresis for the transmission of the congestion end signal. Considering the previous explanations, the figures do not require additional comments.

The block diagrams of Fig. 3 aim only at showing the principles of the invention, and can be physically implemented employing processing units already present in BTS and BSC. Moreover, even if the Internet protocol has been mentioned as preferred application, the invention can be applied to any other packet switching data transmission protocol.

## Claims

1. Method for the asynchronous transport of information blocks, relevant to a packet switching connection, in the descending direction of a communication channel (1) inside the radio access network (BSS) of a mobile communication system (PLMN1), in which, at a downstream end (BTS) of said channel (1), said information blocks are sent at predetermined frequency towards a radio interface (Um), **characterized in that** at the downstream end (BTS) of the channel the information blocks coming from an upstream end (BSC) of the channel (1) enter in an ordered queue of blocks, employing an identification number generated and associated to each block at the upstream end (BSC) of the channel according to a variable law on the basis of an evaluation of the delay made using information on the queue state supplied by said downstream end (BTS); and, any time a block is sent towards the radio interface (Um) an identification number of said block (current block) is compared with the identification number of the last block received, sending a signal to the upstream end (BSC) containing said information on the queue state when the difference between said two numbers, representing the queue length, exceeding an interval delimited by a lower threshold and an upper threshold; and **in that** at the upstream end (BSC), based on the information contained in said signal, said law is changed in such a way that, identification numbers such to bring and maintain said difference within the predetermined interval are associated to blocks to send on the channel (1) at instants following said reception.

2. Method according to claim 1, **characterized in that** said signal contains the identification number of the current block and that of the last block received.

3. Method according to claim 1, **characterized in that** said signal contains the number of the current block and the value of said difference.

4. Method according to any claim 1 through 3, **characterized in that**, at the upstream end (BSC) of channel (1), the information blocks enter the channel (1) according to a law varying on the basis of the information contained in said signal and foreseeing:
a) the transmission of the blocks on the channel (1) at said predetermined frequency if the difference is included between the two thresholds;
b) the transmission of the blocks on the channel (1) at a frequency lower than the predetermined one, if the difference drops under the lower threshold;
c) the temporary suspension of the transmission, if the difference exceeds the upper threshold.

5. Method according to any claim 1 to 4, **characterized in that** said law concerning the generation of identification numbers and the association of the same to the blocks foresees the generation of identification numbers with said predetermined frequency, and:
a) the association of each number generated at a block sent on the channel (1), if the difference is included between the two thresholds,
b) the increase of the identification number of a given quantity and the association to consecutive blocks of non-consecutive identification numbers, when the difference drops under the lower threshold;
c) the decrease of the identification number to a previously used value, when the difference exceeds the upper threshold, the association of an identification number at a block and the transmission of the blocks on the channel being suspended until an identification number not yet used is not newly generated.

6. Method according to any of the previous claims, **characterized in that** it includes a phase of initial delay estimate introduced by the channel (1) in the two directions, made at least on the moment of channel enabling (1) for the packet switching service, in which at said upstream end (BSC) an initial value is determined for the identification number to associate to the blocks, such that an initial value of said difference is inside the interval.

7. Method according to claim 6, **characterized in that** said initial delay estimate is periodically made also before the channel enabling (1) for a packet switching connection.

8. Method according to claim 6 or 7, **characterized in that** said initial value of the identification number is obtained increasing by a given predetermined quantity an initial value of the current block number, communicated by said downstream end (BTS).

9. Method according to claim 8, **characterized in that**, in said phase of initial delay estimate, said initial value of the identification number to assign to a block is communicated by the upstream end (BSC) to the downstream end (BTS) for the comparison with the identification number of the current block and the determination of the initial value of said difference, and, if said initial value of the difference is included in said interval, said downstream end (BTS) starts the actual transmission of the blocks together with their identification numbers.

10. Method according to claim 9, **characterized in that**, if said initial value of the difference is outside the interval, the initial value of identification number to assign to a block is modified and the estimate operations of the delay are repeated with the new initial value.

11. Method according to any of the previous claims, **characterized in that** said packet switching connection is a connection established in the frame of the GPRS service, said asynchronous transport channel (1) is a channel connecting a controller of a base station (BSC) and a transceiver station base (BTS) of a GSM system.

12. Method according to any of the previous claims , **characterized in that** said blocks are blocks of the radio link control level of the transmission protocol inside the radio access network and are obtained from data packets complying with the Internet protocol.

13. Device for the implementation of an asynchronous transport of information blocks relevant to a packet switching connection in the descending direction of a communication channel (1) inside the radio access network (BSS) of a mobile communication system (PLMN1), in which a first unit (BSC) of the network, placed at an upstream end of the channel (1), sendings said information blocks on the channel (1), and a second unit (BTS) of the network, placed at a downstream end of the channel (1), sends the blocks received towards a radio interface with predetermined frequency, **characterized in that**:
- said first unit (BSC) includes means (LBN, LC1) to generate and associate to each block, before the transmission on the channel (1) a relevant identification number according to a variable law, based on the delay introduced by the channel (1), evaluated on the basis of the information on the state of the queue supplied by said second unit (BTS);
- said second unit (BTS) includes first storage means (BU2) to form an ordered queue of the blocks to send to the radio interface (Um), employing the identification number associated to each block received; means (CBN) to determine an identification number of a current block sent towards said radio interface (Um); second storage means (RBN), updated at each arrival of a block, to store the identification number associated to a block received; means (ST, CP, LC2) to evaluate the delay on the basis of the length of the queue formed in said first storage means (BU2), calculated as difference between the number contained in said second storage means (RCN) and the number of the current block, and control the transmission towards the first unit (BSC) of a signal containing said information on the queue state, when the queue length exceeds an interval limited by a lower threshold and an upper threshold; and
- said means (LBN, LC1) for the generation and association of the identification number to a block in the first unit (BSC) include delay estimate means (LC1) that, based on said signal, control the updating of said law in order that identification numbers such to bring the queue length within the predetermined interval are associated to blocks to be sent on the channel (1) at instants following the reception of said signal.

14. Device according to claim 13, **characterized in that** said delay estimate means (LC1) are suitable to operate the packet transmission means (BU1), belonging to said first unit (BSC), in such a way that:
- they send the blocks on the channel (1) at said predetermined frequency, if the queue length is included within the two thresholds:
- they send the blocks on the channel (1) at a frequency lower than the predetermined one, if the queue length drops under the lower threshold;
- temporarily suspend the transmission, when the queue length exceeds the upper threshold.

15. Device according to claim 14, **characterized in that** said delay estimate means (LC1) are suitable to cause the operation of said generation means (LBN) in such a way that these generate the identification numbers with said predetermined frequency and that:
- when the queue length is included in said interval, said generation means (LBN) associate the identification numbers to the blocks at said predetermined frequency, so that consecutive numbers are associated to blocks consecutively sent on the channel (1);
- when the queue length drops under the lower threshold, said generation means (LBN) increase by a first predetermined quantity the value reached on the moment said upstream unit (BSC) receives the relevant signal from the downstream unit (BTS), and associate non-consecutive identification numbers to blocks consecutively sent on the channel (1) ;
- when the queue length exceeds the upper threshold, said generation means (LBN) decrease by a predetermined second quantity the value reached on the moment said upstream unit (BSC) receives the relevant signal from the downstream unit (BTS), the association of identification numbers to the blocks and the transmission of blocks being suspended until the generation of an identification number not previously associated to a block.

16. Device according to any claim 13 to 15, **characterized in that** said means (LC2) to control the transmission of a signal are suitable to cause the sending of signals containing the current block number and the number of the last block received, and said delay estimate means (LC1) in the first unit (BSC) include means to determine the length of the queue present in the first storage means (BU2) of the second unit (BTS) and compare it with said thresholds.

17. Device according to any claim 13 to 15, **characterized in that** said means (LC2) to control the transmission of a signal are suitable to cause signals containing the number of current block and said different to be sent, and said delay estimate means (LC1) are set to compare the difference received with said thresholds.

18. Device according to any claim 13 through 17, **characterized in that** said generation means (LBN), in a phase of initial delay estimate performed on channel enabling or at regular intervals, during the service of the system (PLMN1), are suitable to generate an initial value of the identification number, increasing of a given quantity an initial value of the current block number, supplied with a corresponding signal by said second unit (BTS), and in the fact that said first unit (BSC) communicates to said second unit (BTS) the initial value generated by said generation means (LBN) and receives from the same information on the state of the queue that can be obtained with said initial value, to check the correctness of the initial estimate.

19. Device according to any claim 13 through 18, **characterized in that** said first and second units (BSC, BTS) are the controller of a base station (BSC) and a base transceiver station (BTS) of a GSM system in which the GPRS service is enabled.

20. Device according to any claim 13 through 19, **characterized in that** said asynchronous channel (1) is a channel over which blocks relevant to the radio link control level of the transmission protocol used in the radio access network are transmitted, obtained from data packets complying with the Internet protocol.

## Patentansprüche

1. Verfahren für den asynchronen Transport von Informationsblöcken im Rahmen einer paketvermittelten Verbindung, in absteigender Richtung eines Kommunikationskanals (1) in einem Funkzugangsnetz (BSS) eines mobilen Kommunikationssystems (PLMN1), **dadurch gekennzeichnet, dass** die besagten Informationsblöcke am Downstream-Ende (BTS) des besagten Kanals (1), mit einer vorgegebenen Frequenz an eine Funkschnittstelle (Um) übermittelt werden und hierbei am Downstream-Ende (BTS) des Kanals die Informationsblöcke, die von einem Upstream-Ende (BSC) des Kanals (1) stammen, in eine geordnete Warteschlange von Blöcken eingefügt werden, indem nach variablen Gesetzmäßigkeiten eine Identifikationsnummer generiert und jedem einzelnen Block am Upstream-Ende (BSC) des Kanals zugewiesen wird, basierend auf einer Auswertung, die anhand von Informationen zum Warteschlangenstatus des besagten Downstream-Endes (BTS) vorgenommen wird; und jedes Mal, wenn ein Block an die Funkschnittstelle (Um) übermittelt wird, wird eine Identifikationsnummer dieses Blocks (aktueller Block) mit der Identifikationsnummer des letzten empfangenen Blocks verglichen, wobei ein Signal mit den besagten Informationen zum aktuellen Warteschlangenstatus an das Upstream-Ende (BSC) übermittelt wird, wenn die Differenz zwischen den besagten beiden Nummern, die für die Warteschlangenlänge steht, ein Intervall überschreitet, das durch einen unteren und einen oberen Schwellwert definiert ist; und **dadurch gekennzeichnet, dass** die besagten Regeln am Upstream-Ende (BSC) auf Basis der im vorgenannten Signal enthaltenen Informationen so geändert werden, dass für die über den Kanal (1) zu übermittelnden Blöcke unmittelbar nach dem vorerwähnten Empfang Identifikationsnummern zugewiesen werden, die bewirken, dass die besagte Differenz innerhalb des Vorgabeintervalls liegt und bleibt.

2. Ein Verfahren gemäß Anspruch 1, **dadurch gekennzeichnet, dass** das vorerwähnte Signal die Identifikationsnummer des aktuellen Blocks und die des letzten empfangenen Blocks enthält.

3. Ein Verfahren gemäß Anspruch 1, **dadurch gekennzeichnet, dass** das vorerwähnte Signal die Identifikationsnummer des aktuellen Blocks und den Wert der besagten Differenz enthält.

4. Ein Verfahren gemäß einem der Ansprüche 1 bis 3, **dadurch gekennzeichnet, dass** die Informationsblöcke am Upstream-Ende (BSC) des Kanals (1) in diesen Kanal (1) gemäß einer Gesetzmäßigkeit eintreten, die in Abhängigkeit von den signalinternen Informationen variiert und folgendes vorsieht:
a) die Übertragung der Blöcke auf dem Kanal (1) mit der besagten Vorgabefrequenz, wenn der Differenzwert zwischen den beiden Schwellwerten liegt;
b) die Übertragung der Blöcke auf dem Kanal (1) mit einer niedrigeren Frequenz als der Vorgabefrequenz, wenn der Differenzwert unter den unteren Schwellwert fällt;
c) die vorübergehende Unterbrechung der Übertragung, wenn der Differenzwert über den oberen Schwellwert steigt.

5. Ein Verfahren gemäß einem der Ansprüche 1 bis 4, **dadurch gekennzeichnet, dass** die besagte Gesetzmäßigkeit bezüglich der Generierung von Identifikationsnummern sowie der Zuweisung dieser Nummern zu den Blöcken die Generierung von Identifikationsnummern mit der besagten Vorgabefrequenz vorsieht und
a) die Zuweisung einer Identifikationsnummer, die bei Übermittlung eines Blocks auf dem Kanal (1) generiert wird, wenn der Differenzwert zwischen den beiden Schwellwerten liegt,
b) die Erhöhung dieser Identifikationsnummer um einen bestimmten Wert sowie die Zuweisung zu aufeinanderfolgenden Blöcken von nicht aufeinanderfolgenden Identifikationsnummern, wenn der Differenzwert unter den unteren Schwellwert fällt;
c) die Absenkung der Identifikationsnummer auf einen zuvor verwendeten Wert, wenn der Differenzwert über den oberen Schwellwert steigt, die Zuweisung einer Identifikationsnummer zu einem Block sowie die Übertragung der Blöcke auf dem vorübergehend stillgelegten Kanal, bis eine noch nicht verwendete Identifikationsnummer neu generiert wird.

6. Ein Verfahren gemäß einem der vorgenannten Ansprüche, **dadurch gekennzeichnet, dass** in beiden Richtungen des Kanals, zumindest im Augenblick der Kanalaktivierung (1) für den Paketvermittlungsdienst, eine Phase mit einer ersten Verzögerungsschätzung (1) eingeführt wird, in der am besagten Upstream-Ende (BSC) ein Anfangswert für die den Blöcken zuzuweisende Identifikationsnummer bestimmt wird, um sicherzustellen, dass der erste Wert für die besagte Differenz innerhalb des Intervalls liegt.

7. Ein Verfahren gemäß Anspruch 6, **dadurch gekennzeichnet, dass** die besagte erste Verzögerungsschätzung in regelmäßigen Abständen auch vor der Kanalaktivierung, (1) für eine paketvermittelte Verbindung erfolgt.

8. Ein Verfahren gemäß Anspruch 6 oder 7, **dadurch gekennzeichnet, dass** der besagte Anfangswert für die Identifikationsnummer ermittelt wird, indem der Anfangswert für die aktuelle Blocknummer, die vom besagten Downstream-Ende (BTS) ausgegeben wird, um einen bestimmten Vorgabewert erhöht wird.

9. Ein Verfahren gemäß Anspruch 8, **dadurch gekennzeichnet, dass**, in der Phase der ersten Verzögerungsschätzung der besagte Anfangswert für die einem Block zuzuweisende Identifikationsnummer vom Upstream-Ende (BSC) an das Downstream-Ende (BTS) übergeben wird, damit diese Nummer mit der Identifikationsnummer des aktuellen Blocks verglichen und der Anfangswert für die besagte Differenz bestimmt werden kann, und dadurch, dass, falls dieser Anfangswert für die Differenz im besagten Intervall enthalten ist, am Downstream-Ende (BTS) die eigentliche Übertragung der Blöcke mit den zugehörigen Identifikationsnummern eingeleitet wird.

10. Ein Verfahren gemäß Anspruch 9, **dadurch gekennzeichnet, dass**, falls der besagte Anfangswert für die Differenz außerhalb des Intervalls liegt, der Anfangswert für die einem Block zuzuweisende Identifikationsnummer angepasst wird und der Verzögerungsschätzvorgang mit diesem neuen Anfangswert wiederholt wird.

11. Ein Verfahren gemäß einem der vorgenannten Ansprüche, **dadurch gekennzeichnet, dass** es sich bei der besagten paketvermittelten Verbindung um eine Verbindung handelt, die im Rahmen des GPRS-Dienstes eingerichtet,wird, und dadurch, dass es sich bei dem besagten asynchronen Transportkanal (1) um einen Kanal handelt, über den eine Verbindung zwischen einem Controller einer Basisstation (BSC) und einer Funkbasisstation (BTS) eines GSM-Systems hergestellt wird.

12. Ein Verfahren gemäß einem der vorgenannten Ansprüche, **dadurch gekennzeichnet, dass** es sich bei den besagten Blöcken um Blöcke auf der Funkverbindungs-Steuerungsebene des Übertragungsprotokolls im Funkzugangsnetz handelt und dass diese Blöcke von Datenpaketen stammen, die mit dem Internet-Protokoll konform sind.

13. Ein Gerät zur Implementierung eines Verfahrens für den asynchronen Transport von relevanten Informationsblöcken für eine paketvermittelte Verbindung in absteigender Richtung eines Kommunikationskanals (1) im Funkzugangsnetz (BSS) eines mobilen Kommunikationssystems (PLMN1), bei dem eine erste Netzwerkeinheit (BSC), die sich an einem Upstream-Ende des Kanals (1) befindet, die besagten Informationsblöcke auf dem Kanal (1) übermittelt, und eine zweite Netzwerkeinheit (BTS), die sich an einem Downstream-Ende des Kanals (1) befindet, die empfangenen Blöcke mit einer vorgegebenen Frequenz an eine Fünkschnittstelle übermittelt, **dadurch gekennzeichnet, dass**:
- die besagte erste Einheit (BSC) über eine Einrichtung (LBN, LC1) verfügt, die in der Lage. ist, vor der Übertragung über den Kanal (1) für jeden einzelnen Block eine eindeutige Identifikationsnummer zu generieren und. zuzuweisen, wobei diese Nummer gemäß einer variablen Gesetzmäßigkeit anhand der kanalseitig verursachten Verzögerung bestimmt wird und die Auswertung anhand der Informationen zum Warteschlangenstatus erfolgt, die von der besagten zweiten Einheit (BTS) bereitgestellt werden;
- die besagte zweite Einheit (BTS) über eine erste Speichereinrichtung (BU2) verfügt, die in der Lage ist, aus den an die Funkschnittstelle (Um) zu übermittelnden Blöcken anhand der für jeden Empfangsblock vergebenen Identifikationsnummer eine geordnete Warteschlange zu bilden; eine Einrichtung (CBN) zur Bestimmung einer Identifikationsnummer für den aktuellen Block, der 'an die besagte Funkschnittstelle (Um) übermittelt wird; eine zweite Speichereinrichtung (RBN), die bei Eingang eines jeden neuen Blocks aktualisiert wird und deren Aufgabe es ist, die Identifikationsnummer zu speichern, die einem Empfangsblock zugewiesen wird; eine Einrichtung (ST, CP, LC2), die in er Lage ist, die Verzögerung zu ermitteln, indem sie die Länge der Warteschlange, die in der besagten ersten Speichereinrichtung (BU2) gebildet wird, berücksichtigt und die Differenz zwischen dem numerischen Wert in besagter zweiter Speichereinrichtung (RGN) und der Identifikationsnummer des aktuellen Blocks berechnet; und die darüber hinaus die Übertragung eines Signals mit den besagten Informationen zum Warteschlangenstatus an die erste Einheit (BSC) steuert, Wenn die Länge der Warteschlange außerhalb eines Intervalls liegt, das durch einen unteren und einen oberen Schwellwert begrenzt ist; und
- die besagte Einrichtung (LBN, LC1) zur Generierung und Verknüpfung von Identifikationsnummern für die Blöcke in der ersten Einheit (BSC) über eine Verzögerungsschätzeinrichtung (LC1) verfügt, die die Aktualisierung der besagten Regeln auf Basis des besagten Signals kontrolliert, damit den Blöcken, die auf dem Kanal (1) übermittelt werden sollen, unmittelbar nach Empfang des besagten Signals Identifikationsnummern zugewiesen werden, die innerhalb des Vorgabeintervalls liegen.

14. Ein Gerät gemäß Anspruch, 13, **dadurch gekennzeichnet, dass** die besagte Verzögerungsschätzeinrichtung (LC1) in der Lage ist, die Paketübertragungseinrichtung (BU1) der besagten ersten Einheit (BSC) so zu betreiben, dass:
- die Blöcke auf dem Kanal (1) mit der besagten Frequenz übermittelt werden, wenn die Warteschlangenlänge innerhalb der beiden Schwellwerte liegt:
- die Blöcke auf dem Kanal (1) mit einer geringeren als der vordefinierten Frequenz übermittelt werden, wenn die Warteschlangenlänge unter den unteren Schwellwert fällt;
- die Übertragung vorübergehend ausgesetzt. wird, wenn die Warteschlangenlänge den oberen Schwellwert überschreitet.

15. Ein Gerät gemäß Anspruch 14, **dadurch gekennzeichnet, dass** die besagte Verzögerungsschätzeinrichtung (LC1) in der Lage ist, die besagte Generierungseinrichtung (LBN) so zu betreiben, dass Identifikationsnummern mit der besagten Vorgabefrequenz generiert werden können und dadurch dass:
- die besagte Generierungseinrichtung (LBN), wenn die Warteschlangenlänge innerhalb des besagten Intervalls liegt, den Blöcken die Identifikationsnummern mit der besagten Vorgabefrequenz zuweist, so dass Blöcke, die unmittelbar nacheinander auf dem Kanal (1) übermittelt werden, aufeinander folgende Nummern erhalten;
- die besagte Generierungseinrichtung (LBN), wenn die Warteschlangenlänge unter den unteren Schwellwert fällt, den wert, den die besagte Upstream-Einheit (BSC) in dem Moment ausweist, in dem das relevante Signal von der Downstream-Einheit (BTS) eingeht, um einen ersten Vorgabewert erhöht und den Blöcken, die unmittelbar hintereinander auf dem Kanal (1) übermittelt werden, nicht aufeinander folgende Nummern zuweist;
- die besagte Generierungseinrichtung (LBN), wenn die Warteschlangenlänge den oberen Schwellwert übersteigt, den Wert, den die besagte Upstream-Einheit (BSC) in dem Moment ausweist, in dem das relevante Signal von der Downstream-Einheit (BTS) eingeht, um einen zweiten Vorgabewert absenkt und die Zuweisung von Identifikationsnummern sowie die Übertragung von Blöcken bis zur Generierung einer bislang noch nicht zugewiesenen Identifikationsnummer aussetzt.

16. Ein Gerät gemäß Anspruch 13, 14 oder 15, **dadurch gekennzeichnet, dass** sich die besagte Einrichtung (LC2) zur Kontrolle der Signalübertragung für die Übermittlung von Signalen mit der aktuellen Blocknummer sowie der Nummer des letzten empfangenden Blocks eignet, und die besagte Verzögerungsschätzeinrichtung (LC1) in der ersten Einheit (BSC) über die Möglichkeit verfügt, die Länge der in der ersten Speichereinrichtung (BU2) der zweiten Einheit (BTS) abgelegten Warteschlange zu bestimmen und diesen Wert mit den besagten Schwellwerten zu vergleichen.

17. Ein Gerät gemäß Anspruch 13, 14 oder 15, **dadurch gekennzeichnet, dass** sich die besagte Einrichtung (LC2) zur Kontrolle der Signalübertragung für die Übermittlung von Signalen mit der Nummer des aktuellen Blocks sowie der besagten Differenz eignet, und die besagte Verzögerungsschätzeinrichtung (LC1) für den Vergleich der empfangenen Differenzwerte mit den besagten Schwellwerten ausgelegt ist.

18. Ein Gerät gemäß Anspruch 13, 14, 15, 16 oder 17, **dadurch gekennzeichnet, dass** die besagte Generierungseinrichtung (LBN) in der Lage ist, in einer ersten Verzögerungsschätzungsphase, die bei Kanalaktivierung oder beim Betrieb des Systems (PLMN1) in regelmäßigen Intervallen durchgeführt wird, einen Anfangswert für die Identifikationsnummer zu generieren, indem ein Anfangswert für die aktuelle Blocknummer, der mit dem entsprechenden Signal von der besagten zweite Einheit (BTS) bereitgestellt wird, um einen bestimmten Wert erhöht wird, und **dadurch gekennzeichnet, dass** die besagte erste Einheit (BSC) den von der besagten Generierungseinrichtung (LBN) generierten Anfangswert an die besagte zweite Einheit (BTS) übermittelt und von dieser Informationen zum aktuellen Status der Warteschlange erhält, die mit dem besagten Anfangswert abgerufen werden können, um die Korrektheit der erste Schätzung zu prüfen.

19. Ein Gerät gemäß Anspruch 13, 14, 15, 16, 17 oder 18, **dadurch gekennzeichnet, dass** es sich bei der besagten ersten und zweiten Einheit (BSC, BTS) um den Controller einer Basisstation (BSC) sowie eine Funkbasisstation (BTS) eines GSM-Systems handelt, in dem der GPRS-Dienst aktiviert ist.

20. Ein Gerät gemäß, Anspruch 13, 14, 15, 16, 17, 18 oder 19, **dadurch gekennzeichnet, dass** es sich bei dem asynchronen Kanal (1) um einen Kanal handelt, über den relevante Blöcke für die Funkverbindungs-Steuerungsebene des im Funkzugangsnetz verwendeten Übertragungsprotokolls übertragen werden, und dass diese Blöcke von Datenpaketen stammen, die mit dem Internet-Protokoll konform sind.

## Revendications

1. Procédé de transport asynchrone de blocs d'information, afférent à une connexion par commutation de paquets, dans le sens descendant d'une voie de communication (1) dans le réseau d'accès radiotéléphonique (BSS) d'un système de communications mobiles (PLMN1), dans lequel, à une extrémité aval (BTS) de ladite voie (1), lesdits blocs d'information sont envoyés à une fréquence prédéterminée en direction d'une interface radio (Um), **caractérisé en ce que**, à l'extrémité aval (BTS) de la voie, les blocs d'information provenant d'une extrémité amont (BSC) de la voie (1) entrent dans une file ordonnée de blocs, moyennant l'emploi d'un numéro d'identification produit et associé à chaque bloc à l'extrémité amont (BSC) de la voie selon une loi variable sur la base d'une évaluation du retard faite en utilisant des informations sur l'état de la file fournies par ladite extrémité aval (BTS), et chaque fois qu'un bloc est envoyé en direction de l'interface radio (Um), un numéro d'identification dudit bloc (bloc en cours) est comparé au numéro d'identification du dernier bloc reçu, un signal contenant lesdites informations sur l'état de la file étant envoyé à l'extrémité amont (BSC) lorsque la différence entre lesdits deux numéros, représentant la longueur de la file, dépasse un intervalle délimité par un seuil inférieur et un seuil supérieur, et **en ce que**, à l'extrémité amont (BSC), sur la base des informations contenues dans ledit signal, ladite loi est changée de telle sorte que des numéros d'identification tels à amener et à maintenir ladite différence dans l'intervalle prédéterminé sont associés à des blocs à envoyer sur la voie (1) à des instants suivant ladite réception.

2. Procédé selon la revendication 1, **caractérisé en ce que** ledit signal contient le numéro d'identification du bloc en cours et celui du dernier bloc reçu.

3. Procédé selon la revendication 1, **caractérisé en ce que** ledit signal contient le numéro du bloc en cours et la valeur de ladite différence.

4. Procédé selon l'une quelconque des revendications 1 à 3, **caractérisé en ce que**, à l'extrémité amont (BSC) de la voie (1), les blocs d'information entrent dans la voie (1) selon une loi variant sur la base des informations contenues dans ledit signal et prévoyant :
a) la transmission des blocs sur la voie (1) à ladite fréquence prédéterminée si la différence est comprise entre les deux seuils ;
b) la transmission des blocs sur la voie (1) à une fréquence inférieure à celle prédéterminée si la différence descend sous le seuil inférieur ;
c) la suspension temporaire de la transmission si la différence dépasse le seuil supérieur.

5. Procédé selon l'une quelconque des revendications 1 à 4, **caractérisé en ce que** ladite loi concernant la production de numéros d'identification et l'association de ceux-ci aux blocs prévoit la production de numéros d'identification à ladite fréquence prédéterminée, et :
a) l'association de chaque numéro produit à un bloc envoyé sur la voie (1) si la différence est comprise entre les deux seuils ;
b) l'augmentation du numéro d'identification d'une quantité donnée et l'association à des blocs successifs de numéros d'identification non successifs lorsque la différence descend sous le seuil inférieur ;
c) l'abaissement du numéro d'identification à une valeur utilisée précédemment lorsque la différence dépasse le seuil supérieur, l'association d'un numéro d'identification à un bloc et la transmission des blocs sur la voie étant suspendue jusqu'à ce qu'un numéro d'identification pas encore utilisé ne soit pas à nouveau produit.

6. Procédé selon l'une quelconque des revendications précédentes, **caractérisé en ce qu'**il comprend une phase d'estimation initiale du retard introduit par la voie (1) dans les deux sens, faite au moins au moment de l'activation de la voie (1) pour le service à commutation de paquets, dans laquelle, à ladite extrémité amont (BSC), une valeur initiale est déterminée pour le numéro d'identification à associer aux blocs de telle sorte qu'une valeur initiale de ladite différence se situe dans l'intervalle.

7. Procédé selon la revendication 6, **caractérisé en ce que** ladite estimation initiale du retard est périodiquement faite aussi avant l'activation de la voie,(1) pour une connexion à commutation de paquets.

8. Procédé selon la revendication 6 ou 7, **caractérisé en ce que** ladite valeur initiale du numéro d'identification est obtenue en augmentant d'une quantité prédéterminée donnée une valeur initiale du numéro du bloc en cours, communiqué par ladite extrémité amont (BTS).

9. Procédé selon la revendication 8, **caractérisé en ce que**, dans ladite phase d'estimation initiale du retard, ladite valeur initiale du numéro d'identification à attribuer à un bloc est communiquée par l'extrémité, amont (BSC) à l'extrémité aval (BTS) Pour la comparer avec le numéro d'identification du bloc en cours et déterminer là valeur initiale de ladite différence, et si ladite valeur initiale de la différence est comprise dans ledit intervalle, ladite extrémité aval (BTS) entame la transmission proprement dite des blocs avec leurs numéros d'identification.

10. Procédé selon la revendication 9, **caractérisé en ce que**, si ladite valeur initiale de la différence n'est pas située dans l'intervalle, la valeur initiale du numéro d'identification à attribuer à un bloc est modifiée et les opérations d'estimation du retard sont répétées avec la nouvelle valeur initiale.

11. Procédé selon l'une quelconque des revendications précédentes, **caractérisé en ce que** ladite connexion à commutation de paquets est une connexion établie dans le cadre du service GPRS, ladite voie de transport asynchrone (1) est une voie reliant un contrôleur de station de base (BSC) et une station émettrice-réceptrice de base (BTS) de système GSM.

12. Procédé selon l'une quelconque des revendications précédentes, **caractérisé en ce que** lesdits blocs sont des blocs du niveau de commande de faisceau hertzien du protocole de transmission, dans le réseau d'accès radiotéléphonique et sont obtenus à partir de paquets de données conformes au protocole Internet.

13. Dispositif de mise en oeuvre d'un transport asynchrone de blocs d'information afférent à une connexion par commutation de paquets dans le sens descendant d'une voie de communication (1) dans un réseau d'accès radiotéléphonique (BSS) de système de communications mobiles (PLMN1), dans lequel une première unité (BSC) du réseau, placée à une extrémité amont de la voie (1), envoie lesdits blocs d'information sur la voie (1), et une seconde unité (BTS) du réseau, placée à une extrémité aval de la voie (1), envoie les blocs reçus en direction d'une interface radio à une fréquence prédéterminée, **caractérisé en ce que** :
- ladite première unité (BSC) comprend des moyens (LBN, LC1) pour produire et associer à chaque bloc, avant sa transmission sur la voie (1), un numéro d'identification y afférent selon une loi variable, sur la base du retard introduit par la voie (1), évalué sur la base des informations sur l'état de la file fournies par ladite seconde unité (BTS) ;
- ladite seconde unité (BTS) comprend des premiers moyens de mémorisation (BU2) pour former une file ordonnée des blocs à envoyer à l'interface radio (Um), en employant le numéro d'identification associé à chaque bloc reçu, des moyens (CBN) pour déterminer un numéro' d'identification d'un bloc en cours envoyé en direction de ladite interface radio (Um), des seconds moyens de mémorisation (RBN), mis à jour à chaque arrivée d'un bloc; pour mémoriser le numéro d'identification associé à un bloc reçu, des moyens (ST, CP, LC2) pour évaluer le retard sur la base de la longueur de la file formée dans lesdits premiers moyens de mémorisation (BU2), calculé comme la différence entre le numéro contenu dans lesdits seconds moyens de mémorisation (RCN) et le numéro du bloc en cours, et commander la transmission à la première unité (BSC) d'un signal contenant lesdites informations sur l'état de la file, lorsque la longueur de la file dépasse un intervalle limité par un seuil inférieur et un seuil supérieur, et
- lesdits moyens (LBN, LC1) de production et d'association du numéro d'identification à un bloc dans la première unité (BSC) comprennent des moyens d'estimation du retard (LC1) qui, sur la base dudit signal, commandent la mise à jour de ladite loi afin que des numéros d'identification tels à amener la longueur de la file dans l'intervalle prédéterminé soient associés à des blocs à envoyer sur la voie (1) à des instants suivant la réception dudit signal.

14. Dispositif selon la revendication 13, **caractérisé en ce que** lesdits moyens d'estimation du retard (LC1) sont adaptés pour faire fonctionner les moyens de transmission par paquets (BU1), appartenant à ladite première unité (BSC), de telle sorte que :
- ils envoient les blocs sur la voie (1) à ladite fréquence prédéterminée si la longueur de la file est comprise entre les deux seuils ;
- ils envoient les blocs sur la voie (1) à une fréquence inférieure à celle prédéterminée si la longueur de la file descend sous le seuil inférieur ;
- ils suspendent temporairement la transmission lorsque, la longueur de la file dépasse le seuil supérieur.

15. Dispositif selon la revendication 14, **caractérisé en ce que** lesdits moyens d'estimation du retard (LC1) sont adaptés pour faire fonctionner lesdits moyens de production (LBN) de telle sorte que ceux-ci produisent les numéros d'identification à ladite fréquence prédéterminée et que :
- lorsque la longueur de la file est comprise dans ledit intervalle, lesdits moyens de production (LBN) associent les numéros d'identification aux blocs à ladite fréquence prédéterminée de telle sorte que des numéros successifs soient associés aux blocs envoyés successivement sur la voie (1) ;
- lorsque la longueur de la file descend sous le seuil inférieur, lesdits moyens de production (LBN) augmentent d'une première quantité prédéterminée la valeur atteinte au moment où ladite unité amont (BSC) reçoit le signal afférent de l'unité aval, (BTS) et associent des numéros d'identification non successifs à des blocs envoyés successivement sur la voie (1);
- lorsque la longueur de la file dépasse le seuil supérieur, lesdits'moyens de production (LBN) diminuent d'une seconde quantité prédéterminée la valeur atteinte au moment où ladite unité amont (BSC) reçoit le signal afférent de l'unité aval (BTS), l'association des numéros d'identification aux blocs et la transmission de blocs étant suspendues jusqu'à la production d'un numéro d'identification non associé précédemment à un bloc.

16. Dispositif selon l'une quelconque des revendications 13 à 15, **caractérisé en ce que** lesdits moyens (LC2) pour commander la transmission d'un signal sont adaptés pour provoquer l'envoi de signaux contenant le numéro de bloc en cours et le numéro du dernier bloc reçu, et lesdits moyens d'estimation du retard (LC1) de la première unité (BSC) comprennent des moyens pour déterminer la longueur de la file présente dans les premiers moyens de mémorisation (BU2) de la seconde unité (BTS) et la comparent avec lesdits seuils.

17. Dispositif selon l'une quelconque des revendications 13 à 15, **caractérisé en ce que** lesdits moyens (LC2) pour commander la transmission d'un signal sont adaptés pour provoquer l'envoi de signaux contenant le numéro du bloc en cours et ladite différence, et lesdits moyens d'estimation du retard (LC1) sont réglés pour comparer la différence reçue avec lesdits seuils.

18. Dispositif selon l'une quelconque des revendications 13 à 17, **caractérisé en ce que** lesdits moyens de production (LBN), dans une phase d'estimation initiale du retard exécutée à l'activation de là voie ou à intervalles réguliers, durant le service du système (PLMN1), sont adaptés pour produire une valeur initiale du numéro d'identification, augmentant d'une quantité donnée une valeur initiale du numéro de bloc en cours, fournie avec un signal correspondant par ladite seconde unité (BTS), et **en ce que** ladite première unité (BSC) communique à ladite seconde unité (BTS) la valeur initiale produite par lesdits moyens de production (LBN) et reçoit de ceux-ci des informations sur l'état de la file qui peuvent être obtenues avec ladite valeur initiale, pour vérifier que l'estimation initiale est correcte.

19. Dispositif selon l'une quelconque des revendications 13 à 18, **caractérisé en ce que** lesdites première et seconde unités (BSC, BTS) sont un contrôleur de station de base (BSC) et une station émettrice-réceptrice de base (BTS) d'un système GSM dans lequel le service GPRS est activé.

20. Dispositif selon l'une quelconque des revendications 13 à 19, **caractérisé en ce que** ladite voie asynchrone (1) est une voie sur laquelle des blocs afférents au niveau de commande de faisceau hertzien du protocole de transmission utilisé dans le réseau d'accès radiotéléphonique sont transmis, obtenus à partir de paquets de données conformes au protocole Internet.
